# EUROPÄISCHE PATENTSCHRIFT

(11) **EP 2 019 561 B1**
(45) Veröffentlichungstag und Bekanntmachung des Hinweises auf die Patenterteilung: **03.10.2012**
(21) Anmeldenummer: 08012466.2
(22) Anmeldetag: 10.07.2008
(51) Int. Cl.: H04Q 9/00, H04W 52/02

(54) **Verfahren und Vorrichtung zum stromsparenden Betrieb einer Vielzahl von RFID-Datenträgern**
Method and device for operating a number of RFID data carriers whilst saving electricity
Procédé et dispositif destinés au fonctionnement à faible consommation d'énergie d'un grand nombre de supports de données RFID

(30) Priorität: 25.07.2007 DE 102007034593
(43) Veröffentlichungstag der Anmeldung: 28.01.2009
(73) Patentinhaber: Identec Solutions AG, 6890 Lustenau (AT)
(72) Erfinder: Gantner, Reinhold, 6700 Bludenz (AT)
(74) Vertreter: Riebling, Peter

(56) Entgegenhaltungen:
- DE-A1-102004 004 257
- US-A1- 2005 030 160
- US-A1- 2006 202 804
- US-A1- 2007 016 944

## Beschreibung

Die Erfindung betrifft ein Verfahren und eine Vorrichtung zum stromsparenden Betrieb einer Vielzahl von RFID-Datenträgern nach dem Oberbegriff des Patentanspruches 1.

Es ist bekannt, RFID-Datenträger (RFID = Radio Frequency IDentification = berührungslose Datenübertragung per Funksignal) in einen stromsparenden Schlafmodus zu versetzen, wie sich beispielsweise aus der DE 10 2004 004 257 A1 ergibt. Dort wird allerdings bei einem Transponder-Schließsystem lediglich ein einziger RFID-Datenträger in den Schlafmodus gesetzt, mit dem Ziel, entsprechende Batterielelstung zu sparen.

Die gleiche Kritik gilt im Übrigen auch für die DE 198 01 124 A1 oder die DE 196 01 959 A1.

Die US 2007/016944 A1 offenbart eine Vorrichtung zum stromsparenden Betrieb einer Vielzahl von RFID-Datenträgern, welche mit einer Lese-Schreibeinheit in bidirektionaler Funkverbindung stehen, wobei die Lese-Schreibeinheit ein Energiesparsignal an die RFID-Datenträger senden kann, so dass diese in einen "Schlafmodus" versetzt werden.

Bei der Verwaltung von einer Vielzahl von RFID-Datenträgern, die z. B. in einer Lagerhalle an Gütern angebracht sind, ist es jedoch nicht möglich, einen stromsparenden Betrieb für nur Ausgewählte der Vielzahl von RFID-Datenträgern zu ermöglichen.

Der Erfindung liegt deshalb die Aufgabe zugrunde, einen stromsparenden Betrieb auch von Ausgewählten bei einer Vielzahl von unter dem Sendefeld und Empfangsfeld einer Lese-Schreibeinheit befindlichen RFID-Datenträgern zu ermöglichen.

Zur Lösung der gestellten Aufgabe ist die Erfindung durch das Verfahren nach dem Gegenstand des Anspruches 1 und durch eine Vorrichtung nach dem Gegenstand des Anspruches 12 gekennzeichnet.

Merkmal der Erfindung ist, dass in einem Sende- und Empfangsfeld einer Lese-Schreibeinheit eine Vielzahl von RFID-Datenträgern angeordnet sind und dass bei dieser Vielzahl von RFID-Datenträgern es ermöglicht werden soll, dass diese Datenträger nur einen sehr geringen Stromverbrauch haben. Ferner soll ermöglicht werden, dass die Datenträger nicht alle mit der Lese- und Schreibeinheit kommunizieren, sondern nur ausgewählte wenige Datenträger.

Das Verfahren nach der vorliegenden Erfindung wird deshalb dadurch gelöst, dass die Lese- und Schreibeinheit einen sogenannten bedingten Schlafbefehl an alle RFID-Datenträger sendet und die im Sendefeld diese Informationen empfangenden RFID-Datenträger die gesendete Bedingung mit einer im RFID-Datenträger erfassten Zustandsinformation vergleichen, wobei diese im RFID-Datenträger erfasste Bedingung von einem Sensoreingang abhängt, der mit dem RFID-Datenträger verbunden ist.

Mit der gegebenen technischen Lehre ergibt sich deshalb der Vorteil, dass die Lese- und Schreibeinheit nur einen sogenannten bedingten Schlafbefehl schickt, d. h. der Schlafbefehl wird an alle im Empfangs- und Sendefeld befindlichen RFID-Datenträger gesendet, jedoch gehen nur die RFID-Datenträger für eine bestimmte Zeit in den stromsparenden Schlafmodus, bei denen die Bedingung erfüllt ist.

Bei allen anderen RFID-Datenträgern, bei denen die gesendete Bedingung nicht erfüllt ist, bleiben die RFID-Datenträger im Wachzustand und können dann weitere Befehle empfangen.

Mit diesem bedingten Schlafbefehl wird also eine Vorfiltrierung von einer Vielzahl im Sende- und Empfangsfeld einer Lese-Schreib-Einheit befindlichen RFID-Datenträgern erzielt, weil nur diejenigen im Wachzustand bleiben, bei denen eine bestimmte vorgegebene Bedingung nicht erfüllt ist. Als Beispiel sei hier angegeben, dass in einer Lagerhalle eine Vielzahl von Produkten gelagert sind und jedes Produkt bzw. die Produktverpackung mit einem RFID-Datenträger verbunden ist, wobei jeder RFID-Datenträger mit einem Temperatursensor verbunden ist. Die Temperatursignale werden ständig aber zyklisch von dem RFID-Datenträger erfasst und ausgewertet. Nun kommt ein bedingter Schlafbefehl von der Sende-Schreib-Einheit, und zwar in der Form, dass alle Datenträger (z. B. aus einer Anzahl von 1.000 Datenträgern) für eine bestimmte Zeit in den Schlafmodus gehen sollen, die eine Temperatur von weniger als 30° Celsius aufweisen. Damit wird erreicht, dass beispielsweise von den 1.000 angesprochenen RFID-Datenträgern 950 Datenträger in den Schlafmodus gelangen und 50 Datenträger wach bleiben.

In einem weiteren Verfahrensschritt werden dann den 50 wachgebliebenen Datenträgern weitere Befehle zugestellt, z. B. dass diese Datenträger ihre Identifikationsnummer übermitteln sollen, dass sie ihre Temperatur übermitteln sollen und auch den Ort, an dem sich der Datenträger befindet.

Dies ist nur ein einfaches Beispiel, welches die Vorteile des bedingten Schlafbefehles erläutern soll. Selbstverständlich ist der bedingte Schlafbefehl nicht in Abhängigkeit von einer Umgebungsgröße allein bestimmt. Solche Umgebungsgrößen können z. B. sein die Temperatur, die Feuchte, Schock oder Bewegung, Lichteinfluss, Geräusch, Rauch- oder Fremdgase, eine GPS-Koordinate, eine Zeitänderung oder ein digitaler Eingang oder ein analoger Eingang, an dem ein oder mehrere Schaltimpulse anliegen, die berührungslos oder mechanisch geschaltet werden. Ebenso können an den Sensoreingängen Hallsensoren, Näherungssensoren oder Drehgeber angeordnet sein.

Wichtig ist, dass alle RFID-Datenträger im Wesentlichen den gleichen Sensoreingang aufweisen und demzufolge auch in gleicher Weise auf den bedingten Schlafbefehl reagieren, der z. B. lautet, dass alle, die "Licht gesehen haben" wach bleiben sollen, während alle anderen schlafen gehen sollen.

Selbstverständlich können in einer Lagerhalle auch gruppenweise RFID-Datenträger angeordnet werden, die gruppenweise unterschiedliche Sensoreingänge überwachen. Eine Gruppe kann z. B. Lichtsensoren überwachen, eine zweite Gruppe Geräuschsensoren, eine dritte Gruppe Feuchtesensoren und eine vierte Gruppe Temperatursensoren.

Weiterer Vorteil der Erfindung liegt darin, dass nun die Datenübertragung von den RFID-Datenträgern in Richtung auf die Lese- und Schreibeinheit wesentlich erhöht ist, weil ja nur noch insgesamt 50 Datenträger abgefragt werden müssen, im Vergleich zu den vorherigen 1.000 Datenträgern.

Im Übrigen kann es an der Weiterbildung der vorliegenden Erfindung vorgesehen sein, dass für jede Gruppe eine eigene Lese- und Schreibeinheit vorgesehen ist und dass diese Lese-Schreibeinheiten sequentiell senden, d. h. nicht alle zusammen, sondern z. B. nacheinander folgend.

Ebenso ist es möglich, dass eine einzige Lese-Schreibeinheit eine Vielzahl unterschiedlicher bedingter Schlafbefehle erteilt, die beispielsweise von der Temperatur, der Feuchte, der Geschwindigkeit oder dergleichen abhängen, wobei das jeweilige abgeschickte Telegramm, was den bedingten Schlafbefehl beinhaltet, von den RFID-Datenträgern ausgewertet wird, die genau diesen Sensoreingang überwachen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Lagerhalle mit einer Vielzahl darin befindlicher Datenträger
- Figur 2:: ein Stromdiagramm eines Datenträgers im Sende- und im Schlafmodus
- Figur 3:: ein mögliches Sendetelegramm einer Lese-Schreibeinheit mit bedingtem Schlafbefehl
- Figur 4:: einen Entscheidungsbaum für die Abfolge der hintereinander folgenden Verfahrensschritte

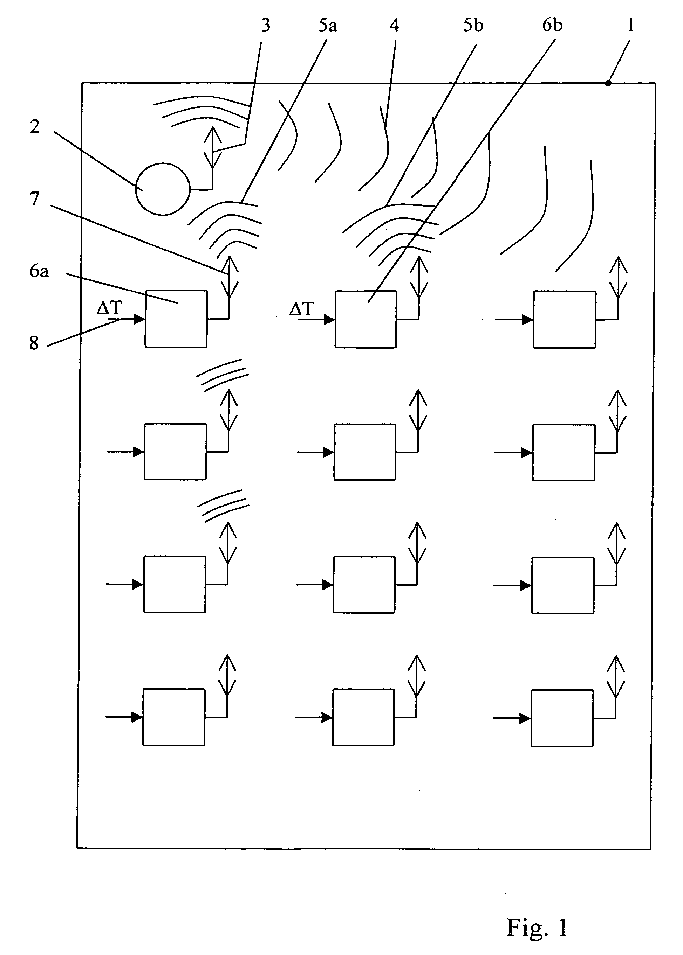

In Figur 1 ist allgemein eine Lagerhalle 1 als Beispiel dargestellt, in deren Bereich eine Lese-Schreibeinheit 2 angeordnet ist, die ein entsprechendes Sendefeld 4 aussendet und ebenfalls auf ein Empfangsfeld 5a, 5b von einer Vielzahl von in der Lagerhalle 1 angeordneten Datenträgern 6 reagiert. Aus diesem Grunde hat die Lese-Schreibeinheit eine entsprechende Sende- und Empfangsantenne 3 und jeder Datenträger 6 hat ebenfalls eine zugeordnete Sende- und Empfangsantenne 7.

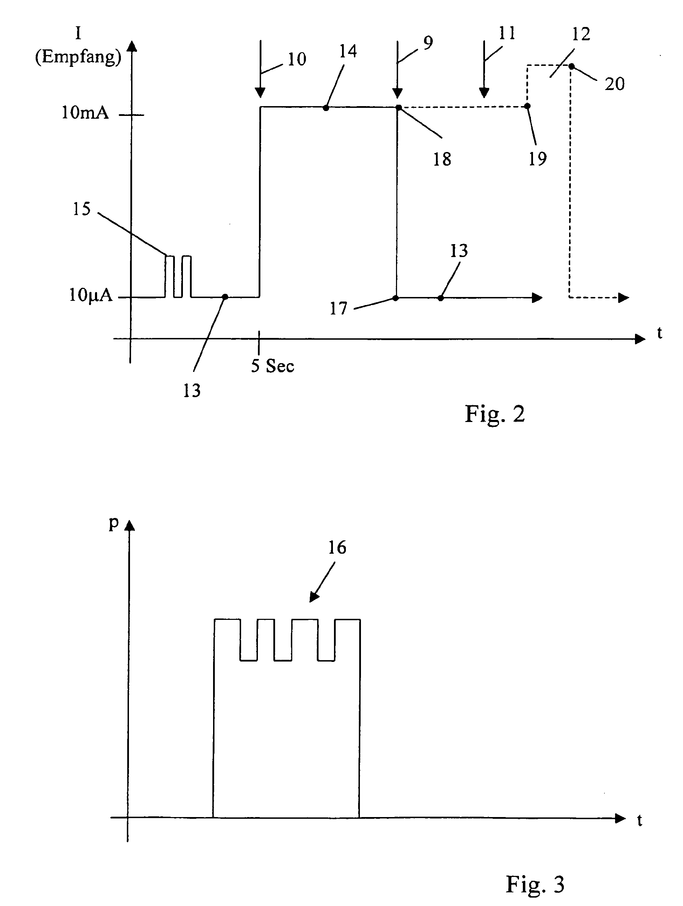

Jeder Datenträger 6 weist einen Eingang auf, an dem ein Sensor 8 angeordnet ist. Als Beispiel sei angegeben, dass der Datenträger 6a eine Temperaturänderung überwacht, der Datenträger 6b eine Geschwindigkeitsveränderung und andere Datenträger andere Sensoren überwachen.
Wichtig ist nun, dass ein stromsparender Betrieb erreicht wird, wie dies anhand der Figur 2 näher dargestellt wird.

Es wird hierbei vorausgesetzt, dass in der Lagerhalle zunächst alle Datenträger 6 sich im sogenannten Schlafmodus 13 befinden, wobei ausgehend von dem Schlafmodus 13 ein Empfangsmodus 15 (auch Sniff-Modus genannt) erfolgt. Dies bedeutet, dass z. B. bei einem Stromverbrauch von 10 µA im Schlafmodus 13 für eine ganz geringe Zeitspanne von z. B. 100 µs der Empfänger des Datenträgers auf Empfang geht und hierbei in den Empfangsmodus 15 gelangt.

Als nächster Verfahrensschritt wird nun zunächst ein Wecksignal 10 an alle Datenträger 6 geschickt, die somit alle in den Wachmodus 14 übergehen.

In diesem Zustand (Wachmodus 14) haben die Datenträger 6 die Fähigkeit, weitere Befehle zu empfangen, unter Anderem auch einen bedingten Schlafbefehl 9.

Wenn nun in einem bestimmten Zeitraum ein bedingter Schlafbefehl 9 eintrifft, wird intern im Datenträger 6 untersucht, ob der bedingte Schlafbefehl mit der Sensorbedingung übereinstimmt. Stimmt er überein, d. h. liegt kein unnatürlicher Überwachungszustand vor, gelangt der Datenträger in den Schlafmodus, wobei es hierfür mehrere Ausführungsformen gibt.

In einer ersten Ausführungsform ist vorgesehen, dass nach Eintreffen des bedingten Schlafbefehles 9 bei Position 17 der Datenträger 6 beispielsweise für einen Zeitraum von 2 s in den unbedingten Schlafmodus kommt. Diese Zeit ist wählbar, und in dieser Zeit ist ein Aufwecken nicht möglich.

In einer anderen Ausgestaltung kann es vorgesehen sein, dass nicht der unbedingte Schlafmodus erreicht wird, sondern dass wiederum in einen bestimmten Zeitraum der Empfangsmodus 15 (Sniff-Modus) durchgeführt wird.

Bei dem Datenträger, bei dem der Sensor einen unerwünschten Messwert liefert, z. B. eine unerwünscht hohe Temperatur oder eine unerwünscht niedrige Temperatur, ein Lichteinfall, ein Geräusch, eine unerwünscht hohe Feuchte oder dergleichen mehr, führt der bedingte Schlafbefehl 9 nicht zum Erreichen des Schlafmodus 13 bei Position 17, sondern bei Position 18 verbleibt der Datenträger in dem Wachmodus 14, und in diesem Bereich kann er beispielsweise eine Statusanfrage 11 von der Sende-Schreibeinheit 2 empfangen. Er antwortet mit einer Status-Antwort 12 bei Position 19, die wiederum von der Lese-Schreibeinheit 2 ausgewertet wird. Danach kann der Datenträger 6 in den unbegrenzten Schlafmodus bei Position 20 gehen.

Hierbei gibt es wiederum die zwei Möglichkeiten, dass ein unbegrenzter Schlafmodus für eine bestimmte Zeit eingehalten wird oder der sogenannte Sniff-Modus 15 durchgeführt wird.

Wichtig ist, dass beispielsweise nach Figur 3 die Lese-Schreibeinheit ein codiertes Sendetelegramm 16 sendet, welches im vorliegenden Ausführungsbeispiel als amplitudenmoduliertes Sendetelegramm 16 ausgeführt ist. Selbstverständlich ist die Erfindung hierauf nicht beschränkt. Die Erfindung ist nicht darauf beschränkt, amplitudenmodulierte Sendetelegramme zu übersenden, denn es kommen sämtliche Kommunikationsverfahren, die zum Stand der Technik gehören, hier in Betracht. Es können frequenzmodulierte, phasenmodulierte oder amplitudenmodulierte Sendetelegramme verwendet werden. Ebenso kann im Zeitschlitzverfahren gesendet werden und dergleichen mehr.

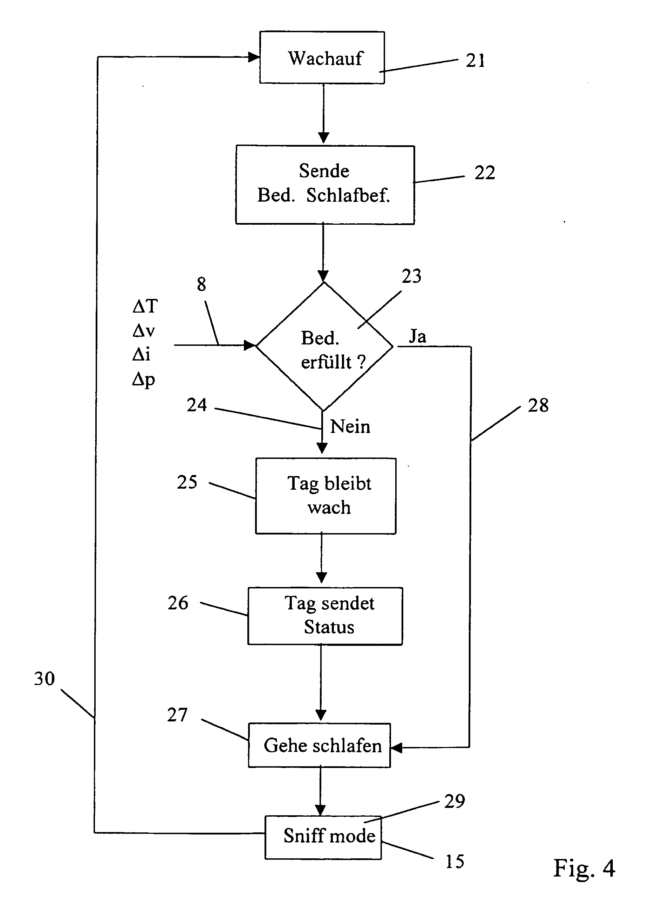

Anhand der Figur 4 wird nun ein Ablaufdiagramm näher geschildert.

Bei Position 21 wird zunächst das Wecksignal 10 an alle Datenträger 6 gesendet. Bei Position 22 sendet die Lese- und Schreibeinheit 2 den bedingten Schlafbefehl.

Der bedingte Schlafbefehl wird in jedem Datenträger 6 ausgewertet, und es wird bei Position 23 geprüft, ob die Bedingung erfüllt ist oder nicht. Dies erfolgt unter Abfrage eines an den jeweiligen Datenträger 6 angeordneten Sensors 8 und in Abhängigkeit von der erfüllten Bedingung oder nicht wird dann bei Position 23 geprüft, ob die Bedingung erfüllt wurde oder nicht. Wurde die Bedingung bei Position 24 nicht erfüllt, dann bleibt der Datenträger bei Position 25 wach und ist für weitere Empfangsbefehle bereit. Beispielsweise kann er bei Position 26 aufgefordert werden, einen Statusbericht mit seiner Identifikationsnummer zu senden.

Wenn er diese Schritte ausgeführt hat, können beim wachen Datenträger eine Reihe weiterer Befehls-Verarbeitungsschritte durchlaufen werden. Dann kann wiederum bei Position 27 ein Schlafbefehl an den außerhalb der Bedingungen liegenden Datenträger 6 gesendet werden.

Erfüllt hingegen der Datenträger die Bedingung bei Position 28, dann wird er unmittelbar in den Schlafmodus 13 bzw. in den Empfangsmodus 15 versetzt.

Dies ist bei Position 29 angegeben.

Somit, wenn sich die Datenträger 6 im Sniff-Modus 15 befinden, kann dann über den Entscheidungszweig 30 jederzeit der Datenträger wieder durch einen Weckbefehl bei Position 21 aufgeweckt werden.

Vorteil der vorliegenden Erfindung liegt darin, dass es nun ausreicht, nur bestimmte kritische Datenträger abzufragen und alle anderen Datenträger ruhig bleiben und nicht in unerwünschter Weise mit der Lese-Schreibeinheit kommunizieren. Dies erhöht einerseits die Geschwindigkeit der Datenübertragung, weil nur einige wenige Datenträger abgefragt und ihre kritischen Werte mitteilen, während alle anderen Datenträger im Schlafmodus oder im bedingten Schlafmodus sind und hierbei die Batterielebensdauer wesentlich vergrößert wird. Es wurde festgestellt, dass die Batterielebensdauer um den Faktor 2 bis 1.000 größer ist als vergleichsweise bei einem Datenträger, der dauernd sendet und empfängt.

### Zeichnungslegende

- 1: Lagerhalle
- 2: Lese-Schreibeinheit
- 3: Sende- und Empfangsantenne
- 4: Sendefeld
- 5a: Empfangsfeld
- 5b: Empfangsfeld
- 6: Datenträger 6a, 6b
- 7: Sende- und Empfangsantenne
- 8: Sensor
- 9: Schlafbefehl
- 10: Wecksignal
- 11: Statusanfrage
- 12: Status-Antwort
- 13: Schlafmodus
- 14: Wachmodus
- 15: Empfangsmodus
- 16: AM-Sendetelegramm
- 17: Position
- 18: Position
- 19: Position
- 20: Position
- 21: Position
- 22: Position
- 23: Position
- 24: Position
- 25: Position
- 26: Position
- 27: Position
- 28: Position
- 29: Position
- 30: Position

## Patentansprüche

1. Verfahren zum stromsparenden Betrieb einer Vielzahl von RFID-Datenträgern, wobei der RFID-Datenträger eine Sende- und Empfangsantenne aufweist, über welche Daten zu oder von einer Lese-Schreibeinheit mittels einem Funksignal gesendet bzw. empfangen werden und der Datenträger zum Empfang eines Energiesparsignals ausgebildet ist, welches den Datenträger in einen sogenannten Schlafmodus versetzt, **dadurch gekennzeichnet, dass** die Lese-und Schreibeinheit (2) einen sogenannten bedingten Schlafbefehl (9) an alle RFID-Datenträger (6, 6a, 6b) sendet und die im Sendefeld (4) diese Informationen empfangenden RFID-Datenträger (6, 6a, 6b) die gesendete Bedingung mit einer im RFID-Datenträger (6, 6a, 6b) erfassten Zustand/Information vergleicht, wobei die im RFID-Datenträger (6, 6a, 6b) erfasste Zustand/Information von einem Sensoreingang abhängt, der mit dem RFID-Datenträger (6, 6a, 6b) verbunden ist.

2. Verfahren nach Anspruch 1, **dadurch gekennzeichnet, dass** die Datenträger (6, 6a, 6b) eine Überwachung einer physikalischen Größe, wie zum Beispiel eine Geschwindigkeitsüberwachung, Temperaturüberwachung, Beschleunigung, Bewegung, Feuchtigkeitsüberwachung, Lichtstärkeüberwachung oder eine Überwachung anderer Sensoren ausführen.

3. Verfahren nach einem der vorhergehenden Ansprüche 1 bis 2, **dadurch gekennzeichnet, dass** der Empfänger des Datenträgers (6, 6a, 6b) ausgehend vom Schlafmodus (13) kurzeitig, wie zum Beispiel für 1 µs auf Empfang wechselt und in den Empfangsmodus (15) gelangt.

4. Verfahren nach einem der vorhergehenden Ansprüche 1 bis 3, **dadurch gekennzeichnet, dass** ein Wecksignal (10) an alle Datenträger (6) geschickt wird, welche somit in einen Wachmodus (14) übergehen und bereit sind weitere Befehle, wie zum Beispiel einen bedingten Schlafbefehl (9) zu empfangen.

5. Verfahren nach einem der vorhergehenden Ansprüche 1 bis 4, **dadurch gekennzeichnet, dass** bei Vorliegen einer Übereinstimmung des eintreffenden, bedingten Schlafbefehls (9) auf den Datenträger (6) mit einer vorliegenden Sensorbedingung kein unnatürlicher Überwachungszustand vorliegt und der Datenträger (6) in den Schlafmodus (13) wechselt.

6. Verfahren nach einem der vorhergehenden Ansprüche 1 bis 5, **dadurch gekennzeichnet, dass** nach Eintreffen des bedingten Schlafbefehls (9) der Datenträger (6) für einen definierten Zeitraum in den unbedingten Schlafmodus wechselt.

7. Verfahren nach einem der vorhergehenden Ansprüche 1 bis 3, **dadurch gekennzeichnet, dass** nach Eintreffen des bedingten Schlafbefehls (9) der Datenträger (6) für einen definierten Zeitraum in den Empfangsmodus (15) wechselt.

8. Verfahren nach einem der vorhergehenden Ansprüche 1 bis 7, **dadurch gekennzeichnet, dass** bei Vorliegen eines unerwünschten Messwertes des Sensors (8), wie zum Beispiel hohe/niedrige Temperatur, Lichteinfall, Geräusch, Beschleunigung, Bewegung, Feuchtigkeit im Vergleich mit dem eintreffenden Schlafbefehl (9) der Datenträger (6) in den Wachmodus (14) wechselt.

9. Verfahren nach einem der vorhergehenden Ansprüche 1 bis 8, **dadurch gekennzeichnet, dass** der Datenträger (6) im Wachmodus (14) für den Empfang einer Statusanfrage (11) von der Sende-Schreibeinheit bereit ist und diese mit einer Statusantwort (12) an die Lese-Schreibeinheit beantwortet und anschließend in den unbegrenzten Schlafmodus (13) oder Empfangsmodus (15) wechselt.

10. Verfahren nach einem der vorhergehenden Ansprüche 1 bis 9, **dadurch gekennzeichnet, dass** die Lese-Schreibeinheit (2) ein codiertes Sendetelegramm (16) sendet, wie zum Beispiel ein amplitudenmoduliertes, frequenzmoduliertes, phasenmoduliertes Sendetelegramm (16) oder das im Zeitschlitzverfahren gesendet wird.

11. Verfahren nach einem der vorhergehenden Ansprüche 1 bis 9 durch folgende Verfahrensschritte gekennzeichnet:
- Senden eines Wecksignals (10) an alle Datenträger (6);
- Senden eines bedingten Schlafbefehls (9);
- Auswertung des gesendeten Schlafbefehls (9) im Datenträger (6);
- Abfrage eines am Datenträger (6) angeordneten Sensors (8)
- Prüfung einer Übereinstimmung von Bedingungen;
- Datenträger (6) in den unmittelbaren Schlafmodus (13) oder in den Empfangsmodus (15) versetzen, wenn gespeicherte Bedingungen des Datenträgers mit Sensorbedingungen übereinstimmen;
- Datenträger (6) für im Wachmodus (14) halten, wenn gespeicherte Bedingungen des Datenträgers (6) mit den Sensorbedingungen nicht übereinstimmen;
- Senden einer Statusanfrage an den Datenträger (6) im Wachmodus (14);
- Senden einer Statusantwort (12) des Datenträgers (6) im Wachmodus (12) an die Lese-Schreibeinheit (2);
- Senden eines weiteren Schlafbefehls (9) an den Datenträger (6) im Wachmodus (12), der keine Übereinstimung der Bedingungen zeigt;
- Aufwecken des Datenträgers (6) aus dem Empfangsmodus (15).

12. Vorrichtung zum stromsparenden Betrieb einer Vielzahl von RFID-Datenträgern, arbeitend nach dem Verfahren gemäß einem der Ansprüche 1-11, wobei der RFID-Datenträger eine Sende- und Empfangsantenne aufweist, über welche Daten zu oder von einer Lese-Schreibeinheit mittels einem Funksignal gesendet bzw. empfangen werden und der Datenträger zum Empfang eines Energiesparsiglals ausgebildet ist, welches den Datenträger in einen sogenannten Schlafmodus versetzt, wobei die Übertragung der Signale zwischen der Lese-Schrelbeinheit (2) und des Datenträgers (6, 6a, 6b) mittels einer am Lese-Schreibeinheit (2) angeordneten Sende-Empfangsantenne (3) und einer am Datenträger (6, 6a, 6b) entsprechend angeordneten Sende- und Empfangsantenne (7) ausgebildet ist, wobei der Datenträger (6a, 6a, 6b) eine Sende- und Empfangsantenne (7) aufweist, welche ein Sendetelegramm (18) an eine Sende- und Empfangsantenne (3) einer Lese-und Schreibeinheit (2) sendet bzw. von dieser empfängt, wobei die Lese-Schreibeinheit (2) Signale in der Form von Befehlen bzw. Anfragen an den Datenträger (6) innerhalb eines Sende- bzw. Empfangsfeldes (4, 5a, 5b) sendet, welche als Schlafbefehl (9), als Wecksignal (10) oder als Statusanfrage (11) ausgebildet sind, wobei der Datenträger (6, 6a, 6b) Signale in der Form als Statusantwort (12) an die Lese-Schreibeinheit (2) sendet und wobei der von der Lese-Schreibeinheit (2) gesendete Schlafbefehl (9) einen Schlafmodus (13) des Datenträgers (6, 6a, 6b) ausbildet, welcher einen stromsparenden Betrieb des Datenträgers (6, 6a, 6b) gewährleistet.

## Claims

1. Method for power-saving operation of a plurality of RFID data carriers, wherein the RFID data carrier has a transmitting and receiving antenna, by means of which data can be transmitted to or received from a read/write unit by means of a radio signal and the data carrier is configured to receive an energy-saving signal, which puts the data carrier into a so-called sleep mode, **characterised in that** the read and write unit (2) transmits a so-called conditional sleep command (9) to all the RFID data carriers (6, 6a, 6b) and the RFID data carriers (6, 6a, 6b) receiving this information in the transmission field (4) compare the transmitted condition with a state/information recorded in the RFID data carrier (6, 6a, 6b), the state/information recorded in the RFID data carrier (6, 6a, 6b) being dependent on a sensor input, which is connected to the RFID data carrier (6, 6a, 6b).

2. Method according to claim 1, **characterised in that** the data carriers (6, 6a, 6b) carry out a monitoring of a physical variable, such as, for example, a speed monitoring, temperature monitoring, acceleration, movement, moisture monitoring, light intensity monitoring or a monitoring of other sensors.

3. Method according to either of claims 1 or 2, **characterised in that** the receiver of the data carrier (6, 6a, 6b), proceeding from the sleep mode (13), briefly, such as, for example for 1 µs, switches over to reception and goes into reception mode (15).

4. Method according to any one of the preceding claims 1 to 3, **characterised in that** a wake-up signal (10) is sent to all the data carriers (6), which therefore go into an awake mode (14) and are ready to receive further commands, such as, for example, a conditional sleep command (9).

5. Method according to any one of the preceding claims 1 to 4, **characterised in that** when agreement exists between the arriving, conditional sleep command (9) to the data carrier (6) and an existing sensor condition, no unnatural monitoring state exists and the data carrier (6) switches over to the sleep mode (13).

6. Method according to any one of the preceding claims 1 to 5, **characterised in that** after the conditional sleep command (9) has arrived, the data carrier (6) switches over to the unconditional sleep mode for a defined time period.

7. Method according to any one of the preceding claims 1 to 3, **characterised in that** after the conditional sleep command (9) has arrived, the data carrier (6) switches over to the reception mode (15) for a defined time period.

8. Method according to any one of the preceding claims 1 to 7, **characterised in that** when an undesired measurement value of the sensor, such as, for example, high/low temperature, incident light, noise, acceleration, movement and moisture are present in comparison to the arriving sleep command (9), the data carrier (6) switches over to the awake mode (14).

9. Method according to any one of the preceding claims 1 to 8, **characterised in that** the data carrier (6) in the awake mode (14) is ready to receive a status query (11) from the transmission/write unit and responds to it with a status response (12) to the read/write unit and then switches over into the unlimited sleep mode (13) or reception mode (15).

10. Method according to any one of the preceding claims 1 to 9, **characterised in that** the read/write unit (2) transmits a coded transmission telegram (16), such as, for example, an amplitude-modulated, frequency-modulated, phase-modulated transmission telegram (16) or one that is transmitted using a time-slot method.

11. Method according to any one of the preceding claims 1 to 9, **characterised by** the following method steps:
- transmitting a wake-up signal to all the data carriers (6);
- transmitting a conditional sleep command (9);
- evaluating the transmitted sleep command (9) in the data carrier (6);
- querying a sensor (8) arranged in the data carrier (6);
- checking for agreement of conditions;
- setting the data carrier (6) to the direct sleep mode (13) or to the reception mode (15), if stored conditions of the data carrier agree with sensor conditions;
- keeping the data carrier (6) in the awake mode (14), if stored conditions of the data carrier (6) do not agree with the sensor conditions;
- transmitting a status query to the data carrier (6) in the awake mode (14);
- transmitting a status response (12) of the data carrier (6) in the awake mode (12) to the read/write unit (2);
- transmitting a further sleep command (9) to the data carrier (6) in the awake mode (12), which does not exhibit any agreement of the conditions;
- waking up the data carrier (6) from the reception mode (15).

12. Device for power-saving operation of a plurality of RFID data carriers, working according to the method according to any one of claims 1 to 11, wherein the RFID data carrier has a transmitting and receiving antenna, by means of which data are transmitted to or received from a read/write unit by means of a radio signal and the data carrier is configured to receive an energy-saving signal, which puts the data carrier into a so-called sleep mode, the transmission of the signals between the read/write unit (2) and the data carrier (6, 6a, 6b) being configured by means of a transmitting/receiving antenna (3) arranged on the read/write unit (2) and a transmitting and receiving antenna (7) accordingly arranged on the data carrier (6, 6a, 6b), wherein the data carrier (6, 6a, 6b) has a transmitting and receiving antenna (7), which transmits a transmission telegram (16) to a transmitting and receiving antenna (3) of a read and write unit (2) or receives it therefrom, wherein the read/write unit (2) transmits signals in the form of commands or queries to the data carrier (6) within a transmitting or receiving field (4, 5a, 5b), which are configured as a sleep command (9), a wake-up signal (10) or as a status query (11), wherein the data carrier (6, 6a, 6b), transmits signals in the form of a status response (12) to the read/write unit (2) and wherein the sleep command (9) transmitted by the read/write unit (2) configures a sleep mode (13) of the data carrier (6, 6a, 6b), which ensures power-saving operation of the data carrier (6, 6a, 6b).

## Revendications

1. Procédé destiné au fonctionnement à faible consommation d'une pluralité de supports de données RFID, le support de données RFID comportant une antenne d'émission et de réception par laquelle des données sont envoyées à une unité de lecture et d'écriture ou reçues de cette dernière au moyen d'un signal radioélectrique et le support de données étant formé pour la réception d'un signal d'économie d'énergie qui met le support de données dans un mode dit de veille, **caractérisé en ce que** l'unité de lecture et d'écriture (2) envoie une instruction conditionnelle dite de veille (9) à tous les supports de données RFID (6, 6a, 6b) et les supports de données RFID (6, 6a, 6b) dans le champ d'émission (4) recevant ces informations comparent la condition envoyée à une état/information détecté dans le support de données RFID (6, 6a, 6b), l'état/information détecté dans le support de données RFID (6, 6a, 6b) dépendant d'une entrée de capteur qui est reliée au support de données RFID (6, 6a, 6b).

2. Procédé selon la revendication 1, **caractérisé en ce que** les supports de données (6, 6a, 6b) exécutent une surveillance d'une grandeur physique, telle que, par exemple, une vitesse, une température, une accélération, un mouvement, de l'humidité, une intensité lumineuse ou une surveillance d'autres capteurs.

3. Procédé selon l'une quelconque des revendications précédentes 1 à 2, **caractérisé en ce que**, à partir du mode de veille (13), le récepteur du support de données (6, 6a, 6b) passe pendant un temps très court, tel que par exemple pendant une 1 µs, en réception et parvient au mode de réception (15).

4. Procédé selon l'une quelconque des revendications précédentes 1 à 3, **caractérisé en ce qu'**un signal de réveil (10) est envoyé à tous les supports de données (6) qui passent ainsi dans un mode dit d'éveil (14) et sont prêts à recevoir d'autres instructions, telles que par exemple une instruction conditionnelle de veille (9).

5. Procédé selon l'une quelconque des revendications précédentes 1 à 4, **caractérisé en ce que**, en présence d'une concordance de l'instruction conditionnelle de veille (9) arrivante sur le support de données (6) avec une condition de capteur présente, aucun état de surveillance non naturel n'existe et le support de données (6) passe dans le mode de veille (13).

6. Procédé selon l'une quelconque des revendications précédentes 1 à 5, **caractérisé en ce que**, après l'arrivée de l'instruction conditionnelle de veille (9), le support de données (6) passe dans le mode de veille inconditionnel pendant une période de temps définie.

7. Procédé selon l'une quelconque des revendications précédentes 1 à 3, **caractérisé en ce que**, après l'arrivée de l'instruction conditionnelle de veille (9), le support de données (6) passe dans le mode de réception (15) pendant une période de temps définie.

8. Procédé selon l'une quelconque des revendications précédentes 1 à 7, **caractérisé en ce que**, en présence d'une valeur de mesure non souhaitée du capteur (8), telle que, par exemple, une température élevée/basse, une incidence de lumière, un bruit, une accélération, un mouvement, une humidité, en comparaison avec l'instruction de veille (9) arrivante, le support de données (6) passe dans le mode d'éveil (14).

9. Procédé selon l'une quelconque des revendications précédentes 1 à 8, **caractérisé en ce que**, le support de données (6) est déjà dans le mode d'éveil (14) pour la réception d'une demande d'état (11) de l'unité d'émission-réception et répond à cette demande avec une réponse d'état (12) adressée à l'unité de lecture et d'écriture et passe ensuite dans le mode de veille (13) ou le mode de réception (15) illimité.

10. Procédé selon l'une quelconque des revendications précédentes 1 à 9, **caractérisé en ce que** l'unité de lecture et d'écriture (2) envoie un télégramme d'émission codé (16), tel que, par exemple, un télégramme d'émission (16) modulé en amplitude, modulé en fréquence, modulé en phase ou l'envoie dans un procédé à créneau temporel.

11. Procédé selon l'une quelconque des revendications précédentes 1 à 9 **caractérisé par** les étapes de procédé suivantes :
- envoi d'un signal de réveil (10) à tous les supports de données (6) ;
- envoi d'une instruction conditionnelle de veille (9) ;
- évaluation, dans le support de données (6), de l'instruction de veille (9) envoyée ;
- interrogation d'un capteur disposé (8) sur le support de données (6)
- vérification d'une concordance de conditions ;
- mise du support de données (6) dans le mode de veille (13) immédiat ou dans le mode de réception (15) si des conditions enregistrées du support de données concordent avec des conditions de capteur ;
- maintien du support de données (6) dans le mode d'éveil (14) si des conditions enregistrées du support de données (6) ne concordent pas avec des conditions de capteur ;
- envoi d'une demande d'état au support de données (6) dans le mode d'éveil (14) ;
- envoi d'une réponse d'état (12) du support de données (6) dans le mode d'éveil (12) à l'unité de lecture et d'écriture (2) ;
- envoi d'une autre instruction de veille (9) au support de données (6) dans le mode d'éveil (12) qui ne montre pas de concordance des conditions ;
- réveil du support de données (6) du mode de réception (15).

12. Dispositif destiné au fonctionnement à faible consommation d'une pluralité de supports de données RFID, fonctionnant d'après le procédé selon l'une des revendications 1 à 11, le support de données RFID comportant une antenne d'émission et de réception par laquelle des données sont envoyées à une unité de lecture et d'écriture ou reçues de cette dernière au moyen d'un signal radioélectrique et le support de données étant formé pour la réception d'un signal d'économie d'énergie qui passe le support de données dans un mode dit de veille, la transmission des signaux entre l'unité de lecture et d'écriture (2) et le support de données (6, 6a, 6b) a lieu au moyen d'une antenne d'émission et de réception (3) disposée dans l'unité de lecture et d'écriture (2) et d'une antenne d'émission et de réception (7) disposée de manière correspondante sur le support de données (6, 6a, 6b), le support de données (6a, 6a, 6b) comportant une antenne d'émission et de réception (7) qui envoie un télégramme d'émission (16) à une antenne d'émission et de réception (3) d'une unité de lecture et d'écriture (2) ou en reçoit un de cette dernière, l'unité de lecture et d'écriture (2) envoyant des signaux sous forme d'instructions ou de questions au support de données (6) à l'intérieur d'un champ d'émission-réception (4, 5a, 5b), lesquels signaux sont formés en tant qu'instructions de veille (9), signaux de réveil (10) ou demandes d'état (11), le support de données (6, 6a, 6b) envoyant des signaux sous forme de réponse d'état (12) à l'unité de lecture et d'écriture (2) et l'instruction de veille (9) envoyée par l'unité de lecture et d'écriture (2) formant un mode de veille (13) du support de données (6, 6a, 6b) qui garantit un fonctionnement à faible consommation d'énergie du support de données (6, 6a, 6b).
